# EUROPEAN PATENT APPLICATION

(11) **EP 4 568 186 A1**
(43) Date of publication of application: **11.06.2025**
(21) Application number: 23860765.9
(22) Date of filing: 23.08.2023
(51) Int. Cl.: H04L 12/28, H05B 47/19, G16Y 10/80, G16Y 40/30

(54) **ELECTRONIC DEVICE FOR PROVIDING MEDIA-BASED LIGHTING CONTROL SERVICES, OPERATION METHOD THEREFOR, AND STORAGE MEDIUM**

(30) Priority: 29.08.2022 KR 20220108365; 24.11.2022 KR 20220159612
(71) Applicant: Samsung Electronics Co., Ltd., Suwon-si, Gyeonggi-do 16677 (KR)
(72) Inventor: PARK, Junhyung, Suwon-si Gyeonggi-do 16677 (KR); KIM, Aram, Suwon-si Gyeonggi-do 16677 (KR); KIM, Byungchul, Suwon-si Gyeonggi-do 16677 (KR); PARK, Sangho, Suwon-si Gyeonggi-do 16677 (KR); PARK, Sunbi, Suwon-si Gyeonggi-do 16677 (KR); PARK, Sunyoung, Suwon-si Gyeonggi-do 16677 (KR); EOM, Sooyong, Suwon-si Gyeonggi-do 16677 (KR); OH, Byeongin, Suwon-si Gyeonggi-do 16677 (KR); JUNG, Jungah, Suwon-si Gyeonggi-do 16677 (KR); HONG, Kiwook, Suwon-si Gyeonggi-do 16677 (KR); KIM, Yongjae, Suwon-si Gyeonggi-do 16677 (KR); MIN, Jungho, Suwon-si Gyeonggi-do 16677 (KR); SEOL, Jaewoo, Suwon-si Gyeonggi-do 16677 (KR); LEE, Jubong, Suwon-si Gyeonggi-do 16677 (KR)
(74) Representative: Gulde & Partner
(86) International application number: PCT/KR2023/012473
(87) International publication number: WO 2024/049088

(57) **Abstract**

According to one embodiment, an electronic device (201) may comprise: a display (260); a communication module (290); and at least one processor (220) operatively connected to the communication module and the display. According to one embodiment, the at least one processor may be configured to identify at least one Internet of Things device that can be interoperable in relation to content playback through the communication module. According to one embodiment, the at least one processor may be configured to display a settings screen containing controllable attribute information on the identified Internet of Things device on the display. According to one embodiment, it is possible to configure settings such that attribute information to be applied to the identified Internet of Things device, from among the controllable attribute information, is stored. According to one embodiment, the at least one processor may control the identified Internet of Things device to perform an operation according to the stored attribute information, on the basis of the content playback.

## Description

### [Technical Field]

An embodiment of the disclosure relates to an electronic device for providing a media-based lighting control service, an operating method thereof, and a storage medium.

### [Background Art]

An increasing number of services and additional functions are being provided through electronic devices, such as user terminals, for example, smartphones. To increase usefulness of electronic devices and satisfy various user demands, communication service providers or electronic device manufacturers are competitively developing electronic devices that provide various functions. Accordingly, various functions provided through electronic devices are becoming increasingly sophisticated.

As wireless communication technology develops, devices using artificial intelligence (AI) are being widely introduced. For example, home appliances that are connected to a network via Internet of Things (hereinafter, IoT) technology may use AI. IoT technology may provide an intelligent Internet technology service that collects and analyzes data generated from devices to create new value in human lives. IoT technology is applicable to fields, such as smart homes, smart buildings, smart cities, smart cars, and smart home appliances, through various convergences and combinations of existing Internet technology and various industries.

Homes have various home appliances for user convenience. Various services for facilitating operations or control of home appliances by using IoT technology are being proposed. Home network technology may provide various services to users at home through a home network. For example, a user may control various IoT devices (e.g., home appliances to which IoT technology is applied) forming the home network by using a personal electronic device (e.g., a smartphone).

With the development of various types of lighting devices, a variety of lighting conditions may be controlled and provided for each situation or location. Accordingly, in the field of lighting control, users may want to receive diverse services depending on environments or situations thereof.

### [Detailed Description of the Invention]

### [Technical Solution]

According to an embodiment, an electronic device 201 may include a display 260, a communication module 290, and at least one processor 220 operatively connected to the communication module and the display. According to an embodiment, the at least one processor may be configured to identify at least one Internet of Things (IoT) device capable of interworking in relation to playback of content through the communication module. According to an embodiment, the at least one processor may be configured to display a setting screen including pieces of controllable attribute information about the identified IoT device on the display. According to an embodiment, the at least one processor may be configured to store pieces of attribute information to be applied to the identified IoT device among the pieces of controllable attribute information. According to an embodiment, the at least one processor may be configured to control the identified IoT device to perform an operation according to the pieces of stored attribute information, based on the play back of the content.

According to an embodiment, a method for an electronic device to provide a media-based lighting control service may include identifying at least one IoT device capable of interworking in relation to playback of content. According to an embodiment, the method may include displaying a setting screen including pieces of controllable attribute information about the identified IoT device. According to an embodiment, the method may include storing pieces of attribute information to be applied to the identified IoT device among the pieces of controllable attribute information. According to an embodiment, the method may include controlling the identified IoT device to perform an operation according to the pieces of stored attribute information, based on the play back of the content.

According to an embodiment, a nonvolatile storage medium may store commands, the commands may be configured to, when executed by at least one processor 220 of an electronic device 201, cause the electronic device to perform at least one operation, and the at least one operation may include an operation of identifying at least one Internet of Things (IoT) device capable of interworking in relation to playback of content. According to an embodiment, the at least one operation may include an operation of displaying a setting screen including pieces of controllable attribute information about the identified IoT device. According to an embodiment, the at least one operation may include an operation of storing pieces of attribute information to be applied to the identified IoT device among the pieces of controllable attribute information. According to an embodiment, the at least one operation may include an operation of controlling the identified IoT device to perform an operation according to the pieces of stored attribute information, based on the play back of the content.

### [Brief Description of Drawings]

FIG. 1 illustrates an Internet of Things (IoT) system according to an embodiment;
FIG. 2 is a block diagram of an electronic device in a network environment according to an embodiment;
FIG. 3 illustrates the configuration of a system in an IoT environment for providing a media-based lighting control service according to an embodiment;
FIG. 4 is a block diagram illustrating the internal configuration of an electronic device according to an embodiment;
FIG. 5 illustrates a method for obtaining music data according to an embodiment;
FIG. 6 is a flowchart illustrating an operation in which an electronic device provides a media-based lighting control service according to an embodiment;
FIG. 7A illustrates an example of a screen for access to a media linkage service according to an embodiment;
FIG. 7B illustrates an example of a screen according to presence or absence of an external device supporting a media linkage service according to an embodiment;
FIG. 8 illustrates an example of the screen configuration of a media linkage service according to an embodiment;
FIG. 9A illustrates an example of a screen illustrating an operation of a media linkage service according to an embodiment;
FIG. 9B illustrates an example of a screen illustrating an operation of a media linkage service according to an embodiment;
FIG. 10 is a flowchart illustrating an operation of automatic termination during execution of media synchronization according to an embodiment;
FIG. 11 is a flowchart illustrating an operation of temporary stoppage during execution of media synchronization according to an embodiment;
FIG. 12 illustrates an onboarding procedure according to an embodiment;
FIG. 13 illustrates a procedure for executing a media linkage service after onboarding according to an embodiment;
FIG. 14 is a flowchart illustrating an automatic playback operation when media linkage starts according to an embodiment;
FIG. 15 is a flowchart illustrating a playback request operation when media linkage starts according to an embodiment;
FIG. 16 illustrates an operation of each of an IoT server and an electronic device upon start of a media linkage service according to an embodiment;
FIG. 17 illustrates an operation of a media linkage service based on setting information about each of an IoT server and an electronic device according to an embodiment;
FIG. 18 illustrates a notification according to whether a peripheral device for a media linkage service is configured according to an embodiment;
FIG. 19 illustrates an example of a screen related to additional setting of a peripheral device according to an embodiment;
FIG. 20 illustrates an example of a screen for registering an audio device to be connected via Bluetooth according to an embodiment;
FIG. 21 illustrates an example of a screen for scene selection related to a media linkage service according to an embodiment;
FIG. 22 illustrates a procedure for providing a media synchronization service in the form of a floating window according to an embodiment; and
FIG. 23 illustrates a floating window for a media linkage service according to an embodiment.

In describing the drawings, the same or like reference numerals may be used to refer to the same or like elements.

### [Mode for Carrying out the Invention]

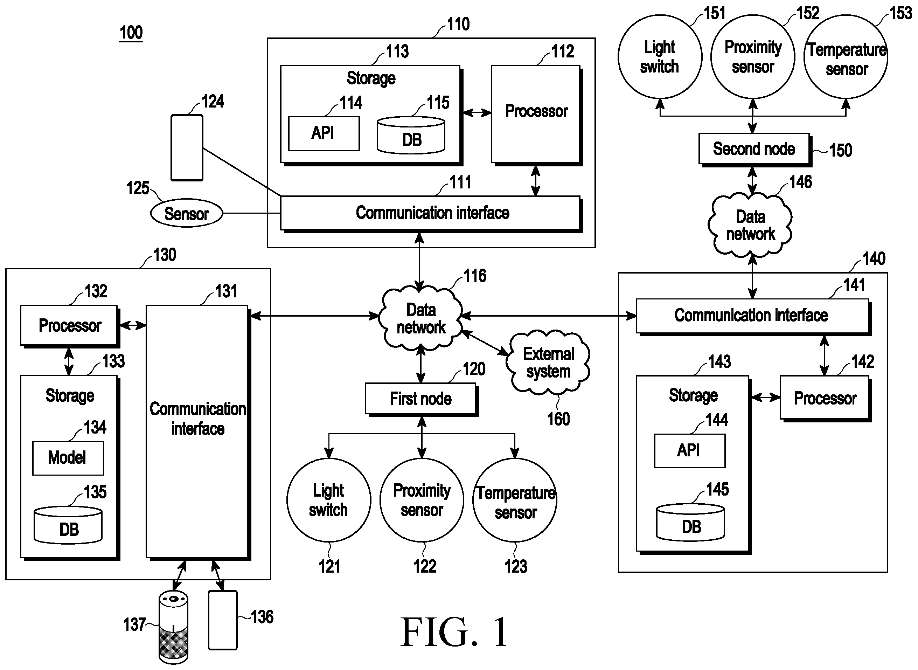

FIG. 1 illustrates an IoT (internet of things) system 100 according to various embodiments. Meanwhile, at least some of the elements shown in FIG. 1 may be excluded, and elements not shown in the drawing may be further included.

Referring to FIG. 1, an IoT system 100 according to an embodiment may include a plurality of electronic devices capable of connecting to the data network 116 or 146. For example, the IoT system 100 may include at least one of a first IoT server 110, a first node 120, a voice assistant server 130, a second IoT server 140, a second node 150, or a devices 121, 122, 123, 124, 125, 136, 137, 151, 152, and 153.

According to an embodiment, the first IoT server 110 may include at least one of a communication interface 111, a processor 112, or a storage 113. The second IoT server 140 may include at least one of a communication interface 141, a processor 142, or a storage 143. The "IoT server" in this document may remotely control and/or monitor one or more devices (e.g., the device 121, 122, 123, 124, 125, 151, 152, and 153) through a relay device (e.g., the first node 120 or the second node 150) or directly without the relay device, based on, for example, a data network (e.g., a data network 116 or a data network 146). The "device" herein may be a sensor, an appliance, an office electronic device, or a device for performing processes disposed (or located) in a local environment, such as, home, offices, factories, buildings, external places, or other types of premises, and the type thereof is not limited. A device that receives a control command and performs an operation corresponding to the control command may be referred to as a "target device". The IoT server may be referred to as a central server in that it may select a target device from among a plurality of devices and provides a control command.

According to an embodiment, the first IoT server 110 may perform communication with the devices 121, 122, and 123 through the data network 116. The data network 116 may indicate a network for long-range communication, such as the Internet or a computer network (e.g., LAN or WAN), or may include a cellular network.

According to an embodiment, the first IoT server 110 may be connected to the data network 116 through the communication interface 111. The communication interface 111 may include a communication device (or a communication module) for supporting communication in the data network 116, and may be integrated into one element (e.g., a single chip) or implemented as a plurality of separate elements (e.g., a plurality of chips). The first IoT server 110 may perform communication with the devices 121, 122, and 123 through the first node 120. The first node 120 may receive data from the first IoT server 110 through the data network 116 and transmit the received data to at least some of the devices 121, 122, and 123. Alternatively, the first node 120 may receive data from at least some of the devices 121, 122, and 123 and transmit the received data to the first IoT server 110 through the data network 116. The first node 120 may function as a bridge between the data network 116 and the devices 121, 122, and 123. Meanwhile, although the first node 120 is illustrated as a single node in FIG. 1, this is only an example, and the number of nodes is not limited.

The "node" in this document may be an edge computing system or may be a hub device. According to an embodiment, the first node 120 may support wired and/or wireless communication of the data network 116 and also support wired and/or wireless communication with the devices 121, 122, and 123. For example, the first node 120 may be connected to the devices 121, 122, and 123 through short-range communication network such as Bluetooth, Wi-Fi, Wi-Fi direct, Z-wave, Zig-bee, INSETEON, X10, or infrared data association (IrDA), but the type of communication is not limited. The first node 120 may be disposed (or located) in the environment such as home, offices, factories, buildings, external places, or other types of premises. Accordingly, the devices 121, 122, and 123 may be monitored and/or controlled by a service provided from the first IoT server 110, and the devices 121, 122, and 123 may not be required to be equipped with the capability of complete network communication (e.g., Internet communication) for direct connection to the first IoT server 110. Although the devices 121, 122, and 123 are illustrated to be implemented as electronic devices within a home environment, such as a light switch, a proximity sensor, a temperature sensor, and the like, this is only an example, and the devices are not limited thereto.

According to an embodiment, the first IoT server 110 may support direct communication with the devices 124 and 125. Herein, "direct communication" may be, for example, communication that does not go through a relay device such as the first node 120 and may indicate communication through, for example, a cellular communication network and/or a data network.

According to an embodiment, the first IoT server 110 may transmit control commands to at least some of the devices 121, 122, 123, 124, and 125. Herein, the "control command" may denote data that causes a controllable device to perform a specific operation, and the specific operation may be an operation performed by the device, including outputting information, sensing information, reporting information, and managing (e.g., deleting or producing) information, and is not limited to a specific type. For example, the processor 112 may obtain information (or a request) for producing control command from the outside (e.g., the voice assistant server 130, the second IoT server 140, the external system 160, or at least some of the devices 121, 122, 123, 124, and 125) and produce control command, based on the obtained information. Alternatively, the processor 112 may produce control command, based on monitoring results of at least some of the devices 121, 122, 123, 124, and 125 satisfying designated conditions. The processor 112 may control the communication interface 111 to transmit the control command to the target device.

According to an embodiment, the processor 112, the processor 132, or the processor 142 may be implemented as a combination of one or more of a general-purpose processor such as a central processing unit (CPU), a digital signal processor (DSP), an application processor (AP), a communication processor (CP), or the like, a graphic-dedicated processor such as a graphical processing unit (GPU) or a vision processing unit (VPU), or an artificial intelligence-dedicated processor such as a neural processing unit (NPU). The above-described processing units are only examples, and those skilled in the art may understand that the processor 112 is not limited as long as it is an arithmetic means capable of executing instructions stored in the memory 113 and outputting executed results.

According to an embodiment, the processor 112 may configure a web-based interface based on an API 114 or expose resources managed by the first IoT server 110 to the outside. The web-based interface may support, for example, communication between the first IoT server 110 and an external web service. For example, the processor 112 may allow the external system 160 to control and/or access the devices 121, 122, and 123. The external system 160 may be, for example, an independent system that is not related to the system 100 or is not a part thereof. The external system 160 may be, for example, an external server or a web site. However, security may be required for the external system 160 to access the devices 121, 122, and 123 or the resources of the first IoT server 110. According to an embodiment, the processor 112 may expose an API endpoint (e.g., a universal resource locator (URL)) based on the API 114 to the outside for an automation application. According to the description above, the first IoT server 110 may transmit a control command to a target device among the devices 121, 122, and 123. Meanwhile, the descriptions of the communication interface 141, the processor 142, the API 144 of the storage 143, and the database 145 of the second IoT server 140 may be substantially the same as the descriptions of the communication interface 111, the processor 112, the API 114 of the storage 113, and the database 115 of the first IoT server 110. In addition, the description of the second node 150 may be substantially the same as the description for the first node 120. The second IoT server 140 may transmit a control command to a target device among the devices 151, 152, and 153. The first IoT server 110 and the second IoT server 140 may be operated by the same service provider in an embodiment but may be operated by different service providers, respectively, in another embodiment.

According to an embodiment, the voice assistant server 130 may transmit and receive data to and from the first IoT server 110 through the data network 116. The voice assistant server 130 according to an embodiment may include at least one of a communication interface 131, a processor 132, or a storage 133. The communication interface 131 may perform communication with a smartphone 136 or an AI speaker 137 through a data network (not shown) and/or a cellular network (not shown). The smartphone 136 or the AI speaker 137 may include a microphone and may obtain a user voice to convert the same to a voice signal and transmit the voice signal to the voice assistant server 130. The processor 132 may receive a voice signal from the smartphone 136 or the AI speaker 137 through the communication interface 131. The processor 132 may process the received voice signal, based on a stored model 134. The processor 132 may produce (or identify) a control command, based on information stored in the database 135, using the processed result. According to an embodiment, the storage 113, 133, or 143 may include a non-transitory storage medium of at least one of a flash memory type, a hard disk type, a multimedia card micro type, card type memory (e.g., an SD or XD memory, etc.), RAM (random access memory), SRAM (static random access memory), ROM (read-only memory), EEPROM (electrically erasable programmable read-only memory), PROM (programmable read-only memory), magnetic memory, a magnetic disk, and an optical disk, and the type thereof is not limited.

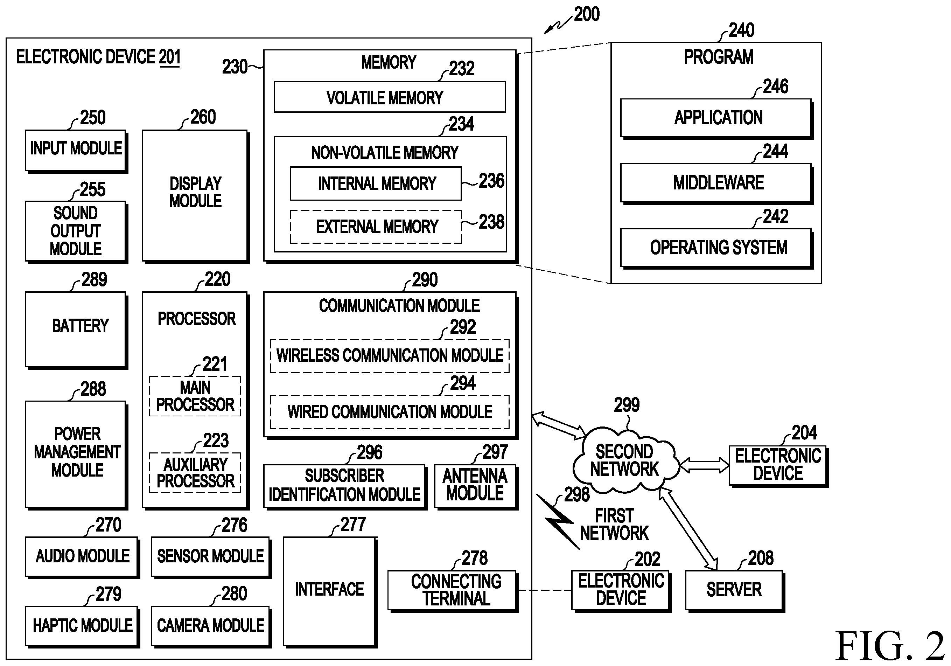

In various embodiments, at least one device (e.g., the device 124) communicating with the first IoT server 110 may be a smartphone (e.g., the electronic device 201 in FIG. 2) in the network environment.

FIG. 2 is a block diagram illustrating an electronic device 201 in a network environment 200 according to various embodiments.

Referring to FIG. 2, the electronic device 201 in the network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module (SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network 298 (e.g., a short-range communication network, such as BluetoothTM, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network 298 or the second network 299, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the electronic devices 202 or 204 may be a device of a same type as, or a different type, from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device 204 may include an internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

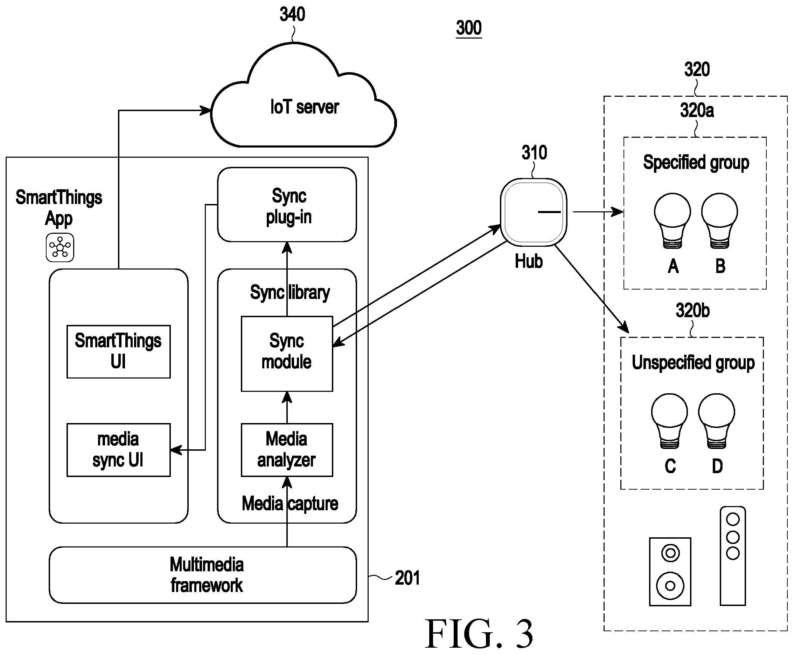

FIG. 3 illustrates the configuration of a system in an IoT environment for providing a media-based lighting control service according to an embodiment. An electronic device 201 in FIG. 3 may be the electronic device 201 of FIG. 2. The electronic device 301 of FIG. 3 may have the same configuration as the electronic device 201 of FIG. 2.

In the IoT system of FIG. 3, a user may use at least one electronic device 201, and may have and control at least one connectable device, based on the electronic device 201. For example, the electronic device 201 may control at least one lighting device connected through a network in the IoT environment. With development of various lighting devices, interactive services, that is, services that fit the user's intention in conjunction with various external data, are required to be provided in addition to traditional lighting services.

For example, when playing content, such as music or an image, to control peripheral devices connected to the IoT system, the user may be provided with and play limited content by using a separate hardware or through a separate interoperation with a specific content provider. In this case, since separate integration operations are required each time to enable interoperation with the peripheral devices connected to the IoT system, the number of pieces of contents provided by the specific content provider may be limited.

Therefore, it is necessary to provide a lighting service that matches the mood of music through a lighting device (or lighting system) capable of interworking with media (e.g., music or an image) without being limited to content in a specific format, that is, without distinction of content providers, for example, when playing music.

Hereinafter, an embodiment provides an electronic device, an operating method thereof, and a storage medium for providing a media-based lighting control service in an IoT environment.

Referring to FIG. 3, the IoT system 300 for providing the media-based lighting control service may include the electronic device 201, a hub 310, a plurality of external devices 320, and/or an IoT server 340. According to an embodiment, the system 300 may further include servers, such as a cloud server and an application market server, in addition to the IoT server 340. In an embodiment, the IoT server 340 may include a cloud server.

According to an embodiment, the hub 310 may include a communication unit, and may receive data from the plurality of external devices 320 through the communication unit. The hub 310 may be referred to as a hub device, a control device, an access point (AP), a coordinator, a server, or a bridge. For example, the hub 310 may collect data received from the plurality of external devices 320, and the collected data may be transmitted to the electronic device 201 at home or a remote server (e.g., the IoT server 340). For example, the hub 310 may be configured as a separate device, or may include an electronic device, such as a TV or a PC.

According to an embodiment, the plurality of external devices 320 may be located in various spaces, and may be connected to the electronic device 201 through the hub 310. According to an embodiment, the external devices 320 may include various types of electronic devices or digital devices that operate based on Internet of Things (IoT) technology, such as a smart home. For example, the external devices 320 may be referred to as Internet of Things devices or IoT devices.

At least some of the external devices 320 may include a lighting device, a sensor, or a switch. A device incapable of direct communication among the external devices 320 may be connected to the electronic device 201 through another external device connected to the electronic device 201. The external devices 320 according to an embodiment are not limited to the foregoing types of devices, and may include all devices capable of communicating with the electronic device 201. The electronic device 201 may be capable of 1:N communication with the external devices 320.

According to an embodiment, the external devices 320 may operate by user manipulation, or may operate automatically when a given condition is satisfied. For example, when an event occurs, the external devices 320 may output data (or a signal) to the hub 310 in response to the occurrence of the event. For example, the data may include a device ID, and a unique device ID may be configured in advance when a device is manufactured. At least some of the external devices 320 may include a communication module, and may output the data to the hub 310 through the communication module. For example, at least some of the external devices 320 may establish a connection with the electronic device 201, and may receive information about the hub 310 to be directly connected therewith through the established connection, thereby connecting to the hub 310, connecting to the IoT server 340 through the hub 310, and maintaining the connection with the IoT server 340.

According to an embodiment, at least some of the external devices 320 may be capable of interworking with media, and may automatically operate when the media is played. For example, among the plurality of external devices 320, lighting devices (e.g., lights) may be located in various spaces, and may be disposed in different positions in the same space. The lighting devices may include a lighting device 320a belonging to a specified group and a lighting device 320b not belonging to the group. Group-controlled lighting devices A and B 320a may be constrained from being separately controlled by other services during a lighting control service linked with media (hereinafter, a media sync service (or media linkage service)), and only lighting devices C and D 320b not belonging to the group may be separately controlled by the other services. The lighting devices 320a and 320b may be remotely controlled during the media sync service, and for example, power on/off, brightness, color temperature, color, or color tone of the lighting devices may be adjusted based on playback of the media.

In an embodiment, media may be music or an image (or an image). Examples of the media may include any playable content in addition to those described above, and the types thereof may not be limited thereto. However, for convenience, playable content may be referred to as media hereinafter, among which music will be illustrated as an example for explanation.

Although a lighting device may be automatically controlled according to playback of media in the electronic device 201 in an embodiment, other types of devices (e.g., a speaker or an electric curtain or blind) previously designated among the plurality of external devices 320 may also be controlled in addition to the lighting device.

According to an embodiment, the electronic device 201 is a device that manages the plurality of external devices 320, and may search for surrounding external devices 320 and establish communication with each of the external devices 320. Accordingly, the electronic device 201 may receive data from the plurality of external devices 320, and may display a screen for the external devices 320 corresponding to the received data. For example, the electronic device 201 may manage state information about the plurality of external devices 320, based on the received data. In an embodiment, the electronic device 201 may be a user device (e.g., a smartphone).

According to an embodiment, when an Internet of Things-based application (hereinafter, IoT app) for controlling the plurality of external devices 320 is executed, the electronic device 201 may display a user interface (UI) (e.g., SmartThings UI) related to the executed application.

According to an embodiment, the electronic device 201 may play music through the IoT app. The electronic device 201 may provide or control the lighting control service linked to the music through a UI (e.g., a music sync UI) related to a music-linked service provided by the IoT app, and may remotely control the lighting devices 320a and 320b through the network. For example, the electronic device 201 may analyze sound source data (or a sound file) to extract information about the music when playing the music, and may control the lighting device 320a corresponding to the target group of the media sync service, based on the information about the music. In embodiment, in addition to the lighting device 320a, other types of devices (e.g., a speaker or an electric curtain or blind) may also be designated to be included in the target group of the sound synch service.

According to an embodiment, the electronic device 201 may execute an application capable of playing content, such as music. For example, the electronic device 201 may play content through a menu provided by the IoT app. In addition, the electronic device 201 may directly execute the application capable of playing the content without entering the IoT app. In an embodiment, the application may be an application that supports the media linkage service capable of actively controlling a lighting device according to content playback. Accordingly, the content played by the application may be provided audibly for the user, and an atmosphere may be provided visually for the user according to the operation of the lighting device.

In an embodiment, the application capable of playing the content may be an application program that controls the electronic device 201 to play media content, such as video, music, and radio, and the electronic device 201 may play and provide the content for the user according to the content playback application.

The content may include, for example, web content provided through the Internet and multimedia content provided through a broadcasting network. According to an embodiment, the electronic device 201 may receive content including music and video and content-related information via downloading or streaming from at least one server (e.g., a content provider) through the network. The type of content may be any media content playable on the electronic device 201 through downloading or streaming. In the following description, music will be described as an example among the media content.

For example, according to an embodiment, the content playback application may include a music streaming application (or a music platform), a video sharing service (e.g., YouTube), an over-the-top (OTT) platform, or a video playback application. According to an embodiment, any music playable through the electronic device 201 may be used to control the lighting devices regardless of the type of sound data played or the type of an application that plays the sound data.

As described above, the IoT system 300 may provide the media-linked lighting control service.

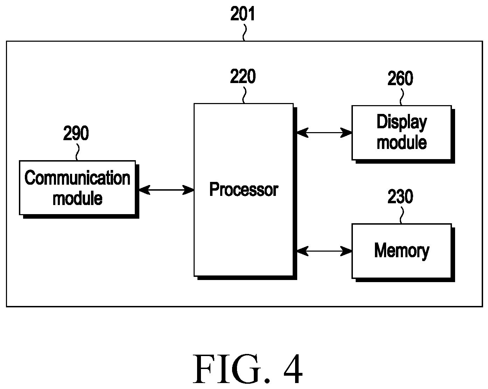

FIG. 4 is a block diagram illustrating the internal configuration of an electronic device according to an embodiment.

Referring to FIG. 4, the electronic device 201 may include at least one processor 220, memory 230, a display module 260, and/or a communication module 290.

According to an embodiment, the memory 230 (e.g., the memory 230 of FIG. 2) may store information for communication with at least one external device among a plurality of external devices 320 and data transmitted and received. According to an embodiment, the memory 230 may store a control program for controlling the electronic device 201, a UI related to an application provided by a manufacturer or downloaded from an external source, images for providing the UI, user information, a document, databases, or pieces of related data. For example, the memory 230 may store an Internet of Things-based application (e.g., an IoT application) for controlling an operation of an external device in an indoor environment.

According to an embodiment, the memory 230 may store instructions to, when executed, control the processor 220 to perform various operations. According to an embodiment, the memory 230 may be operatively connected to the communication module 290, the display module 260, and the processor 220, and may store instructions to identify at least one external device (e.g., a lighting device) capable of interworking in relation to content playback, to display a setting screen including pieces of controllable attribute information about the identified external device, to store pieces of attribute information to be applied to the identified external device among the pieces of controllable attribute information, and to control the identified external device to perform an operation according to the pieces of stored attribute information, based on the content playback.

According to an embodiment, the display module (or display) 260 (e.g., the display module 260 of FIG. 2) may display a user interface related to an IoT application executed when the IoT application is executed under control of the processor 220. According to an embodiment, the display module 260 may display the external devices 320 by using objects, respectively. An object is a graphic element related to an external device, and may include an image representing an external device, such as an icon.

According to an embodiment, the communication module 290 may perform communication with the external devices 320 under control of the processor 220. According to an embodiment, the communication module 290 may perform communication by using at least one of communication methods including Zigbee, Z-Wave, Wi-Fi, Bluetooth, ultra-wide band (UWB), wireless USB, and near-field communication (NFC). For example, the communication module 290 may perform low-power wireless communication using Zigbee or Z-Wave communication for the communication with the external devices 320. According to an embodiment, the communication module 290 may support short-range communication, such as Bluetooth and near-field communication (NFC), in addition to Zigbee or Z-Wave communication.

According to an embodiment, the processor 220 may perform an operation based on at least one communication method supported by the electronic device 201. According to an embodiment, the processor 220 may be connected to surrounding external devices by a specified communication method. For example, the processor 220 may perform communication with at least some of the external devices 320 by using a first communication method, and may perform communication with at least some other external devices of the external devices 320 by using a second communication method. For example, the processor 220 may indirectly communicate with the external devices 320 through a hub 310, and the external devices 320 may communicate with each other or with the electronic device 201 through an adjacent external device corresponding to an intermediate medium or the hub 310.

According to an embodiment, the processor 220 may monitor, configure, and control the external devices 320 registered in a server (e.g., an IoT server 340) by using a user account. For example, the processor 220 may provide a menu for a media linkage service in an IoT application for controlling the external devices 320 connected to the electronic device 201. The processor 220 may identify and synchronize with at least one target capable of interworking with media in response to execution of the media linkage service.

The processor 220 may identify surrounding connectable external devices (e.g., a lighting device) needed for lighting control among the plurality of external devices 320 according to a request from a user or the execution of the media linkage service. The processor 220 may output various UIs required or for control in the entire process of controlling external devices for the media linkage service as well as execution of the media linkage service on the display module 260.

In an embodiment, the processor 220 may identify at least one external device capable of interworking in relation to content playback for the media linkage service. Although a lighting device is described as an example of the at least one capable of interworking external device, other types of IoT devices may also be designated as targets for the media linkage service.

Specifically, in an embodiment, before controlling external devices for the media linkage service, the processor 220 may identify whether an external device that supports the media linkage service is installed. For example, in relation to providing the media linkage service, the processor 220 may identify an external device capable of supporting the media linkage service among the plurality of external devices 320. Further, in an embodiment, the processor 220 may identify whether a target for the media linkage service is designated through the IoT application. For example, the processor 220 may identify whether other types of devices (e.g., a speaker and an electric curtain or blind) are designated among the plurality of external devices 320 in addition to the lighting device.

In an embodiment, when the external device supporting the media linkage service is installed, the processor 220 may identify whether the designated target among the plurality of external devices 320 is in a state of providing the media linkage service or is in a state of being ready to provide the media linkage service.

In an embodiment, the processor 220 may output a UI for controlling the identified external devices on the display module 260 in response to identification of external devices for the media linkage service. For example, the processor 220 may display a setting screen including pieces of controllable attribute information about the identified external device on the display module 260. For example, the setting screen may include at least one of an item related to playback of music, guide information about the music, or an item indicating start of a lighting control service according to the playback of the music.

The processor 220 may store pieces of attribute information to be applied to the identified external device in the memory 230, based on a user setting through the setting screen. The processor 220 may control the identified external device to perform an operation according to the pieces of stored attribute information as the playback of the music starts. Accordingly, the external device (e.g., the lighting device) may be controlled according to the music being played, and thus the user may be provided with the customized lighting control service that matches the mood of the music. For example, the pieces of attribute information may include at least one of the brightness, color, intensity of change, color temperature, or power on/off of the lighting device.

According to an embodiment, the processor 220 may control the lighting device by organically linking the color, color temperature, or color tone of the lighting device with music data, such as the genre, tempo, and intensity of music through separate control or group control by each light according to a scenario determined in advance for each music genre.

Controlling a light according to music may mean, for example, turning a lighting device on/off, adjusting the brightness, adjusting the color temperature, and adjusting the color or color tone. For example, in relation to a setting of attribute information, elements (e.g., music data) required for lighting control may be extracted from a music source, and a lighting device may be actively controlled according to the extracted music data.

Although the foregoing description has been made with reference to a case of controlling a light according to music for illustration, a light may also be controlled according to playback of media, such as a video. According to an embodiment, the processor 220 may analyze a video, and extract elements necessary for lighting control from the analyzed result. For example, the processor 220 may separately control each lighting device, based on attribute information, such as the color, color temperature, genre, or intensity of change of the video through video analysis. In addition, the processor 220 may control the lighting device by organically linking the color, color temperature, or color tone of the lighting device according to the tempo, intensity, or color tone of the video.

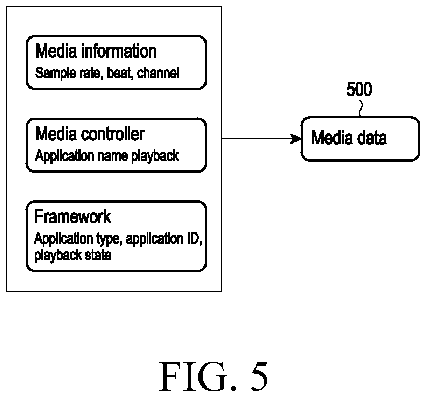

To explain a method of extracting elements required for lighting control, reference may be made to FIG. 5. FIG. 5 illustrates a method of obtaining music data according to an embodiment. For example, referring to FIG. 5, the processor 220 may select an application to be used when executing content, and obtain media data (e.g., music or video) 500 from the selected application (e.g., a content provider). For example, the media data 500 may include an element, such as a sample rate, a tempo, and a channel, required to determine the output pattern of a lighting device, and may also include any information classifiable in relation to music playback, such as the genre of music (e.g., jazz or hip-hop).

Referring to FIG. 5, a framework may provide information related to the type of an application capable of playing music, an application ID, or a playback state. A media controller may obtain the name of an application (e.g., the name of the content provider) currently playing content. Accordingly, the processor 220 may obtain information about an application performing music playback to identify an application to actually play music, based on the information provided by the framework. For example, when an application is a media type and is performing playback, the processor 220 may identify an application ID matching the name of the application obtained from the media controller. Accordingly, the framework may request and obtain a sound source corresponding to the application ID according to information related to music playback, such as audio information (e.g., a sample rate, a tempo, or a channel). The processor 220 may control a light that interactively changes during music playback, based on the media data 500, for example, according to the information related to the music playback included in the media data 500.

In an embodiment, the processor 220 may store pieces of attribute information about a lighting device for the media linkage service in an endpoint application, and may also store the same in the hub 310 or the IoT server 340 (e.g., a cloud) through the communication module 290.

For example, when receiving pieces of information related to control of an external device for the media linkage service, the IoT server 340 may store the pieces of information in a separate storage space. According to an embodiment, as shown below in Table 1, the processor 220 may store pieces of information in which target devices and pieces of attribute information about the target devices are mapped differently for each hub 310 in the IoT server 340.

**[Table 1]**

| **pk** | **sk** | **saguid** | **source** | **enterZone** | **timestamp** |
|---|---|---|---|---|---|
| installedappId_1 | source#mobileDeviceId1 | aaa | {"state": "on", "enterZoneId": 1234567890111, "bridgeId": bridgeId_1 "timestamp": 1646282665} | | 1661323737775 |
| installedappId_1 | source#mobileDeviceId2 | bbb | {"state": "on", "enterZoneId": 1234567890123, "bridgeId": bridgeld 2 "timestamp": 1646282665} | | 1661323737333 |
| installedappId_1 | enterZone#bridgeId_1 | | | {"id": "1234567890111", "name": "Music Area 1" "preset": "SUBTLE", "colorPalette": "Neutral", "brightness": 10.5, "latency": 30.5} | |
| installedappId_1 | enterZone#bridgeId_2 | | | {"id": "1234567890123", "name": "Music Area 1" "preset": "SUBTLE", "colorPalette": "Neutral", "brightness": 10.5, "latency": 30.5} | |

In Table 1, "pk" may represent the ID of an application (e.g., the ID of an application corresponding to the media linkage service) installed in a virtual space (e.g., home or an office), "sk" may represent identification information for identifying a device of the same user since even the same user may use different devices for the media linkage service, "saguid" may represent an identifier of a user account, "source" may represent an identifier for identifying the hub 310 for lighting control and setting information about a lighting device for the hub 310, and "enterzone" may represent a space since one hub 310 may manage one or more spaces (or zones). Here, a space (or zone) may be a space where a linkable (or synchronized) target is specified for the media linkage service.

For example, a user may move to a space, such as home or an office, in possession of the electronic device 201, and may designate this space as a virtual space in the IoT application. In a case of using the media linkage service by connecting to a hub at home and in a case where of using the media linkage service by connecting to a hub at the office, the same screen of the media linkage service may be displayed on the electronic device 201, but pieces of information configured corresponding to the respective virtual spaces may be different. In this case, the respective hubs may store different pieces of setting information about a device of a control target associated with media playback. For example, a setting of connection with an external device to be separately controlled or an external device to be controlled by group during music playback and information configured to group the external devices and to enable the external devices to operate in a specified mode or scene may be mapped to identification information (e.g., bridge ID) about a hub related to a virtual space and stored. This mapping information may be shared with other users permitted (or authenticated) by the user.

For example, when another authenticated user executes the IoT application in a predesignated office to execute the media linkage service, an electronic device of the other user may connect to the hub corresponding to the office and obtain the mapping information. The electronic device of the other user may control the lighting device according to the mapping information during media playback, and thus the other user may also have a similar experience to that of the user. Various UIs required or for control in the entire process of controlling external devices for the media linkage service as well as execution of the media linkage service will be described later.

According to an embodiment, an electronic device 201 may include a display 260, a communication module 290, and at least one processor 220 operatively connected to the communication module and the display. According to an embodiment, the at least one processor may be configured to identify at least one Internet of Things (IoT) device capable of interworking in relation to playback of content through the communication module. According to an embodiment, the at least one processor may be configured to display a setting screen including pieces of controllable attribute information about the identified IoT device on the display. According to an embodiment, the at least one processor may be configured to store pieces of attribute information to be applied to the identified IoT device among the pieces of controllable attribute information. According to an embodiment, the at least one processor may be configured to control the identified IoT device to perform an operation according to the pieces of stored attribute information, based on the play back of the content.

According to an embodiment, the content may include at least one of music and video, and the identified IoT device may include a lighting device.

According to an embodiment, the pieces of controllable attribute information about the IoT device may include at least one a brightness, color, intensity of change, color temperature, or power on/off of the lighting device.

According to an embodiment, the setting screen may include at least one of an item related to the playback of the content, guide information about the content, or an item indicating a start of a lighting control service according to the playback of the content.

According to an embodiment, the at least one processor may be configured to obtain information about an application that performs the playback of the content, based on at least one piece of setting information related to a type of an application capable of content playback, an application ID, or a playback state, obtain information related to the playback of the content, based on the obtained information about the application, and control the identified IoT device to perform the operation according to the pieces of stored attribute information according to the information related to the playback of the content.

According to an embodiment, the at least one processor may be configured to wait for a specified time in response to stoppage or termination of the playback of the content, and release synchronization with the identified IoT device after a lapse of the specified time.

According to an embodiment, the at least one processor may be configured to identify whether a video transmission/reception service is connected during the playback of the content, and release the synchronization with the identified IoT device in response to connection to the video transmission/reception service.

According to an embodiment, the at least one processor may be configured to store the pieces of attribute information to be applied to the identified IoT device by mapping the attribute information to each virtual space managed by each of at least one hub device.

According to an embodiment, the at least one processor may be configured to identify the at least one IoT device capable of interworking in relation to the playback of the content in response to a content playback request in a state in which an application to control a plurality of IoT devices is executed.

According to an embodiment, the at least one processor may be configured to display an execution screen corresponding to the playback of the content in a form of a floating window on at least a portion of the display during the playback of the content.

According to an embodiment, in the state in which the application to control the plurality of IoT devices is executed, the at least one processor may be configured to identify a specified first scene mode in relation to the content playback request among previously stored scene modes in response to the content playback request, control at least part of the plurality of IoT devices to perform a function corresponding to the specified first scene mode during the playback of the content, identify a specified second scene mode in relation to the termination of the playback of the content in response to the termination of the playback of the content, and control at least part of the plurality of IoT devices to perform a function corresponding to the specified second scene mode after the termination of the playback of the content.

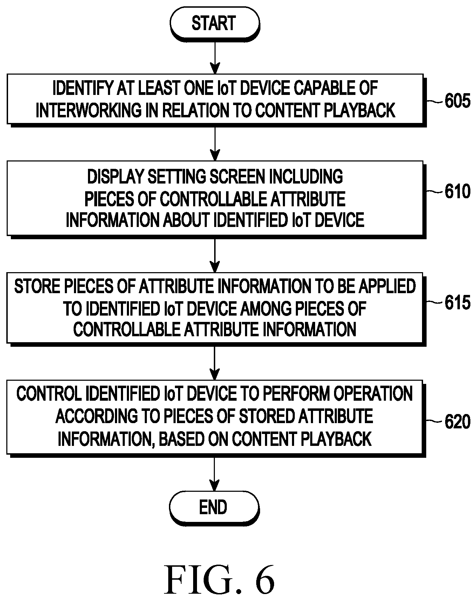

FIG. 6 is a flowchart illustrating an operation in which an electronic device provides a media-based lighting control service according to an embodiment.

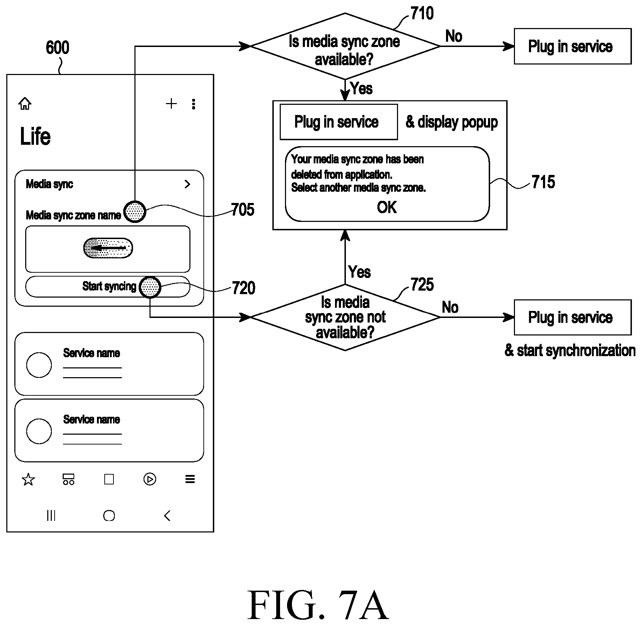

Referring to FIG. 6, an operating method may include operation 605 to operation 620. Each operation of the operating method of FIG. 6 may be performed by the electronic device (e.g., the electronic device 201 of FIG. 2 and FIG. 3) or at least one processor (e.g., the processor 220 of FIG. 2 and FIG. 3) of the electronic device. In an embodiment, at least one of operation 605 to operation 620 may be omitted, some operations may be performed in a different order, or another operation may be added. A description will be made with reference to FIG. 7A to FIG. 9B to assist understanding of a description of FIG. 6.

In operation 605, the electronic device 201 may identify at least one IoT device that is capable of interworking in relation to playback of content. The content may include at least one of music and video, and the identified IoT device may include a lighting device. Accordingly, the electronic device 201 may identify and synchronize with at least one target capable of interworking with media in response to execution of a media linkage service. For example, a screen for executing the media linkage service may be illustrated in FIG. 7A. FIG. 7A illustrates an example of a screen for access to a media linkage service according to an embodiment. Referring to FIG. 7A, in the screen 600 for the media linkage service, a user may select a part 705 displaying a media sync zone name or an object (e.g., a button) 720 corresponding to start syncing.

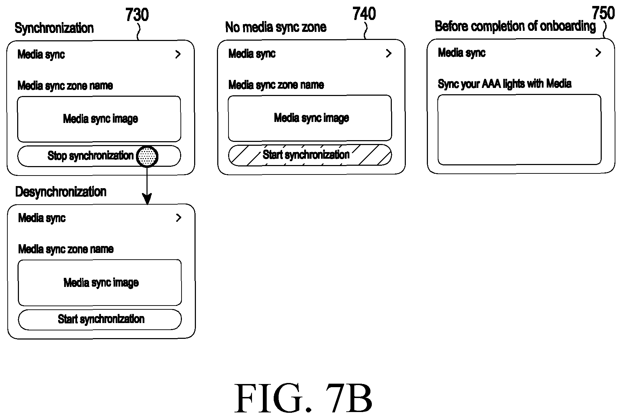

The media sync zone may display grouping of targets for the media linkage service. In response to selection of the part 705 displaying the media sync zone name or the object 720, the electronic device 201 may identify whether the media sync zone is unavailable in operation 710 or operation 725, which means identifying whether a target group for the media linkage service is designated. When the media sync zone is unavailable in each of operation 710 and operation 725, a pop-up may be displayed to indicate that there is no target group designated in an application for the media linkage service in operation 715. When the media sync zone is available, the media linkage service may be executed through service plug-in. Accordingly, the electronic device 201 may display a screen illustrated in FIG. 7B.

FIG. 7B illustrates an example of a screen according to presence or absence of an external device supporting a media linkage service according to an embodiment. For example, when the media linkage service is executed in response to the selection of the object 720 corresponding to start syncing in FIG. 7A, a screen indicating that a lighting control service is being executed in conjunction with media may be displayed as in a first screen 730. The electronic device 201 may stop the media linkage service in response to selection of an object corresponding to stop syncing. Further, when the media sync zone is not available, i.e., when there is no designated target group, the object corresponding to start syncing may be displayed in an inactive state in which user selection is impossible as in a second screen 740 of FIG. 7B. When onboarding is not completed, since there is no connectable external device and thus a music area is not available, i.e., since there is no designated target group, only a guide image may be displayed without a user-selectable button being displayed as in a third screen 750 of FIG. 7B.

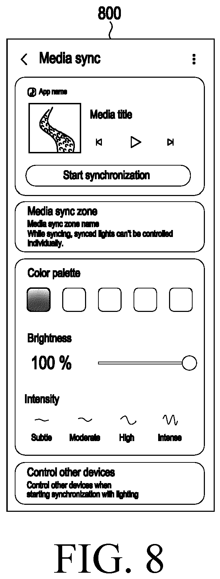

In operation 610, the electronic device 201 may display a setting screen including pieces of controllable attribute information about the identified IoT device. In an embodiment, the pieces of controllable attribute information about the IoT device may include at least one of the brightness, color, intensity of change, color temperature, or power on/off of the lighting device. In an embodiment, the setting screen may include at least one of an item related to the playback of the content, guide information about the content, or an item indicating start of a lighting control service according to the playback of the content. The setting screen is as illustrated in FIG. 8. FIG. 8 illustrates an example of the screen setting of a music linkage service according to an embodiment.

Referring to FIG. 8, a screen 800 of a media linkage service may include information about a content provider providing a sound source or video information, metadata about content currently playing, or various pieces of information related to the content currently playing including a thumbnail, title, or author of the content currently playing. Further, the screen may include a control button for starting or pausing the playback of the content or going forward or backward as an item related to the playback of the content. The screen may also include a button related to the start of the lighting control service. In addition, the screen may include an item for configuring at least one of a color palette for selecting the light color of the lighting device, brightness, or intensity of change indicating the tempo at which a light changes in relation to attribute information about the lighting device.

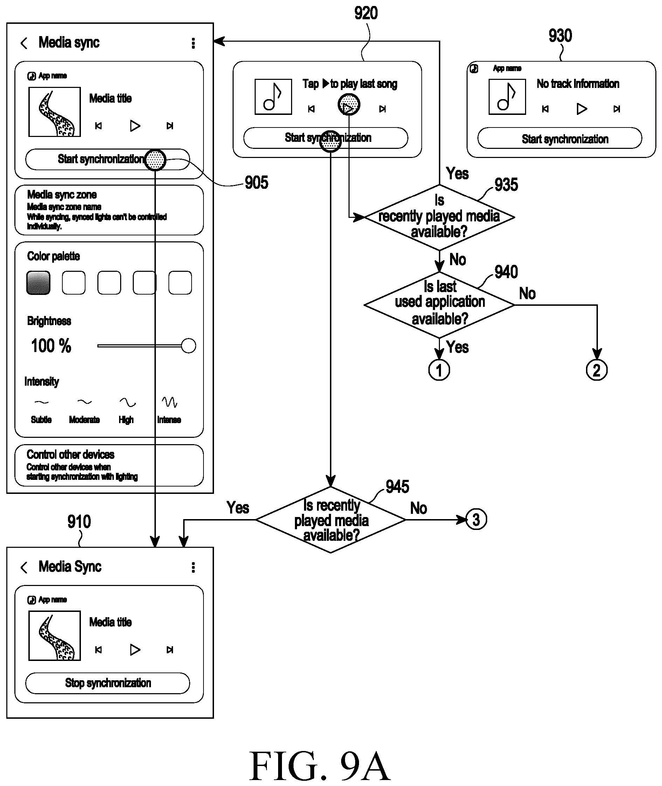

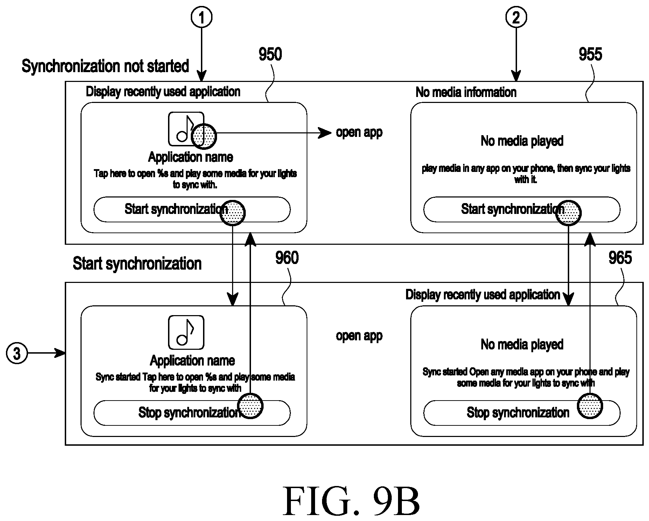

An operation according to selection of an item on the screen of the media linkage service of FIG. 8 may be described with reference to FIG. 9A and FIG. 9B. FIG. 9A illustrates an example of a screen illustrating an operation of a media linkage service according to an embodiment, and FIG. 9B is a diagram continuing from FIG. 9A, in which symbols ①, ②, and ③ are used to indicate the connection relationship between FIG. 9A and FIG. 9B.

Referring to FIG. 9A, in response to selection 905 of the button related to the start of the lighting control service, the start button may be changed to a stop button to be displayed in a first window 910 related to media playback. When there is recently played media, a second window 920 related to the recently played media may be displayed. When there is no recently played media, a third window 930 indicating no related information may be displayed. For example, in response to selection of a play button on the second window 920, the electronic device 201 may identify whether the recently played media is available in operation 935. When the recently played media is available, the electronic device 201 may start playback, and when the recently played media is not available, the electronic device 201 may identify whether the last used application is available in operation 940. Further, in response to the selection of the button related to the start of the lighting control service on the second window 920, the electronic device 201 may identify whether the recently played media is available in operation 945.

When the last used application is available in operation 940, a fourth window 950 may be displayed before synchronization starts as in FIG. 9B. An application to play the content may be executed by selecting an application name on the fourth window 950. When the last used application is not available in operation 940, a fifth window 955 may be displayed before the synchronization starts as in FIG. 9B. The fifth window 955 may include guide information indicating that there is no media information related to. When the button related to the start of the lighting control service is selected on the fourth window 950 and the fifth window 955 or when the recently played content is not available in operation 945, the synchronization may be started and a sixth window 960 or a seventh window 965 may be displayed. As shown in FIG. 9A and FIG. 9B, an access point for providing the lighting control service during media playback may be configured by various methods. For example, access may be possible via service plug-in by selecting a menu for the media linkage service with an IoT application executed or by selecting a synchronization start button with a window for media playback displayed, and there may be various access methods for starting the lighting control service.

In operation 615, the electronic device 201 may store pieces of attribute information to be applied to the identified IoT device among the pieces of controllable attribute information. For example, the electronic device 201 may store pieces of attribute information according to user selection on a screen such as FIG. 7A and FIG. 7B.

In operation 620, the electronic device 201 may control the identified IoT device to perform an operation according to the pieces of stored attribute information, based on the playback of the content.

In an embodiment, the electronic device 201 may obtain information about an application that performs the playback of the content, based on at least one piece of setting information related to the type of an application capable of playing content, an application ID, or a playback state. In an embodiment, the electronic device 201 may obtain information related to the playback of the content, based on the obtained information about the application. In an embodiment, the electronic device 201 may control the identified IoT device to perform the operation according to the pieces of stored attribute information according to the information related to the playback of the content.

In an embodiment, the electronic device 201 may wait for a specified time in response to the stoppage or termination of the playback of the content. In an embodiment, the electronic device 201 may release synchronization with the identified IoT device after a lapse of the specified time.

In an embodiment, the electronic device 201 may identify whether the electronic device is connected to a video transmission/reception service during the playback of the content. In an embodiment, the electronic device 201 may release the synchronization with the identified IoT device in response to connection to the video transmission/reception service.

In an embodiment, the electronic device 201 may store the pieces of attribute information to be applied to the identified IoT device by mapping the attribute information to a virtual space managed by each of at least one hub device.

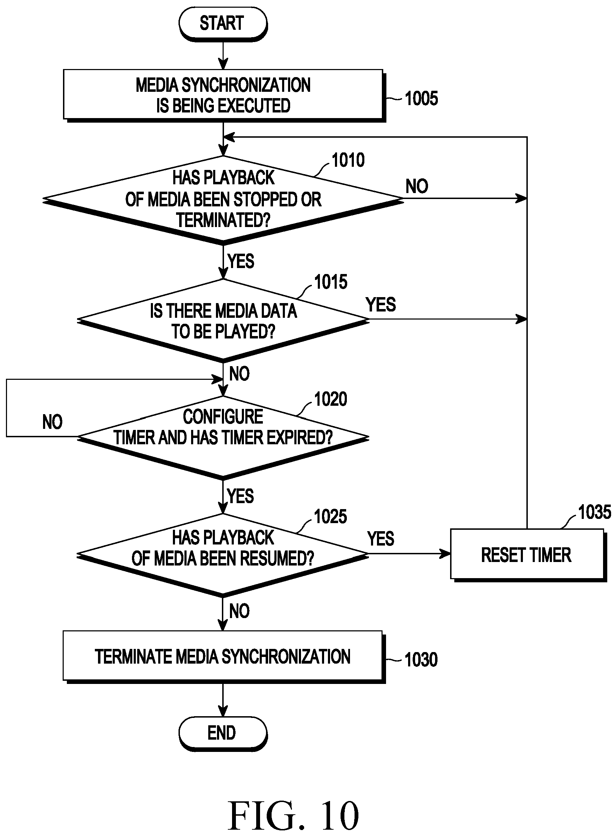

FIG. 10 is a flowchart illustrating an operation of automatic termination during execution of media synchronization according to an embodiment. Media synchronization may indicate a state in which an electronic device 201 is connected to a lighting device for playback of media, such as music or video.

Referring to FIG. 10, while executing media synchronization in operation 1005, the electronic device 201 may identify whether playback of media has been stopped or terminated in operation 1010. In operation 1015, the electronic device 201 may identify whether there is media data to be played, based on the playback of the media being stopped or terminated. For example, when the playback of the media is temporarily stopped, there may be the media data remaining to be played, and when the playback of the media is completed and terminated, there may be no more media data remaining to be played. Therefore, the electronic device 201 may identify whether there is the media data to be played. When there is the media data to be played, the electronic device 201 may return to operation 1010. When there is no media data to be played, the electronic device 201 may configure a timer and identify whether the timer expires in operation 1020. The electronic device 201 may identify whether the playback of the media is resumed in response to expiration of the timer in operation 1025. When the playback of the media is resumed, the electronic device 201 may reset the timer in operation 1035 and return to operation 1010. When the playback of the media is not resumed even after the expiration of the timer, the electronic device 201 may terminate the media synchronization in operation 1030.

For example, a lighting device that is linked even in a state the playback of the media is stopped may be in a state of synchronizing with the electronic device 201 and continuing to wait until the media is played. Accordingly, the electronic device 201 may maintain synchronization with the lighting device when the playback of the media is temporarily stopped, but may terminate the synchronization with the lighting device when the media is no longer played even after a lapse of a certain time.

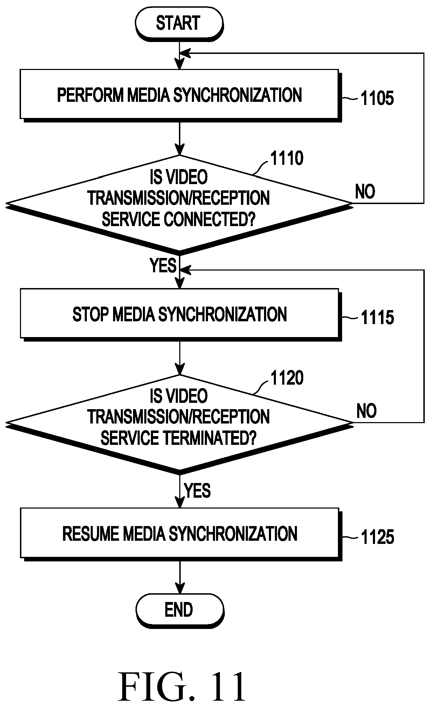

FIG. 11 is a flowchart illustrating an operation of temporary stoppage during execution of media synchronization according to an embodiment.

Referring to FIG. 11, while performing media synchronization in operation 1105, an electronic device 201 may identify whether a video transmission/reception service is connected in operation 1110. The electronic device 201 may stop the media synchronization, based on connection of the video transmission/reception service being identified in operation 1115. When the video transmission/reception service is not connected, the electronic device may return to operation 1105 and maintain an operation according to performance of the media synchronization. After the media synchronization is stopped, the electronic device 201 may identify whether the video transmission/reception service is terminated in operation 1120. The electronic device 201 may perform the media synchronization again, based on termination of the video transmission/reception service being identified in operation 1125. When the video transmission/reception service is not terminated, the electronic device 201 may return to operation 1115 and maintain stoppage of the media synchronization.

As described above, when a video transmission/reception channel is used while playing media, any one of a media synchronization operation and a synchronization operation for video transmission/reception may be controlled to be performed so that the operations do not overlap. For example, among a media playback operation and an operation using the video transmission/reception channel, the operation using the video transmission/reception channel may have a higher priority. In an embodiment, to identify the operation using the video transmission/reception channel, the electronic device 201 may identify whether video mirroring is connected, a display is wirelessly connected, the video transmission/reception service is connected via a network, or a video control system is connected via a network.

To determine whether the video transmission/reception channel is connected, the electronic device 201 may perform such determination when starting the media synchronization or while performing the media synchronization. For example, when a screen mirroring service starts while playing the media, since the mirroring service is a priority service, the electronic device 201 may stop playing the media and then release the synchronization.

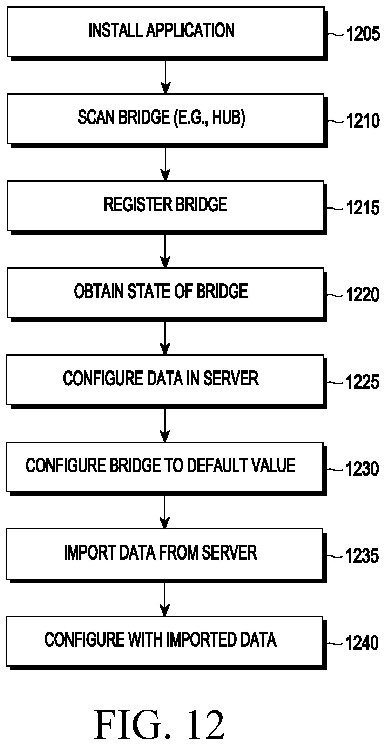

To control a lighting device while playing the media, an onboarding procedure for registering a hub that manages the lighting device and the lighting device in an IoT server 340 may be required. The onboarding procedure will be described with reference to FIG. 12. FIG. 12 illustrates an onboarding procedure according to an embodiment.

Referring to FIG. 12, in operation 1205, the electronic device 201 may install an application. For example, the electronic device 201 may install an IoT application that supports a media linkage service according to a user's selection. The electronic device 201 may scan a bridge (e.g., a hub) in operation 1210, and may register the scanned bridge in operation 1215. For example, the scanned bridge may be registered in the IoT server 340. In operation 1220, the electronic device 201 may obtain the state of the bridge to identify whether the bridge is normally connected. When the bridge is normally connected, the electronic device 2901 may configure data in a server (e.g., the IoT server 340) in operation 1225, may configure the bridge to a default value in operation 1230, and may then import data mapped to the bridge from the server in operation 1235. Accordingly, in operation 1240, the electronic device 201 may configure onboarding with the imported data. When the onboarding is completed, the electronic device 201 may control a lighting device on board through the media linkage service of the IoT application.

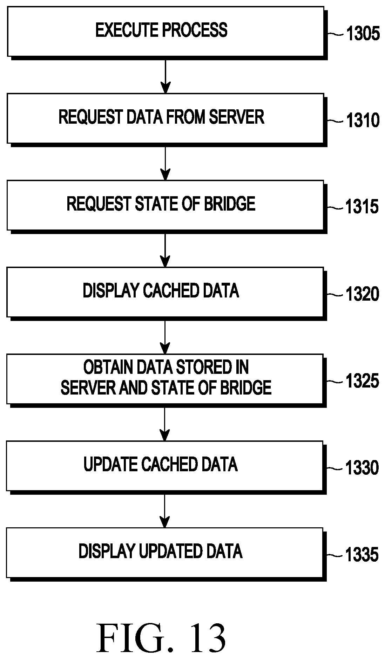

FIG. 13 may be referenced to describe an operation of executing a media linkage service after the onboarding procedure. FIG. 13 illustrates a procedure for executing a media synchronization service after onboarding according to an embodiment.

Referring to FIG. 13, the electronic device 201 may execute a process in operation 1305, may request data from a server in operation 1310, and may request the state of a bridge (e.g., a hub) in operation 1315. For example, the electronic device 201 may request the state of the bridge to identify whether the hub for controlling a lighting device is normally connected and capable of communication. When the bridge is in a state of being capable of communication, the electronic device 201 may display cached data in operation 1420. For example, the electronic device 201 may display pieces of setting setting information for controlling a lighting device. The electronic device 201 may obtain the data stored in the server and the state of the bridge in operation 1325, may update the cached data in operation 1330, and may display the updated data in operation 1335. For example, based on reception of a request to start a media linkage service, the electronic device 201 may obtain data, such as information about recently played content or the last used application, from the server storing the data, and may configure and display a screen for the media linkage service.

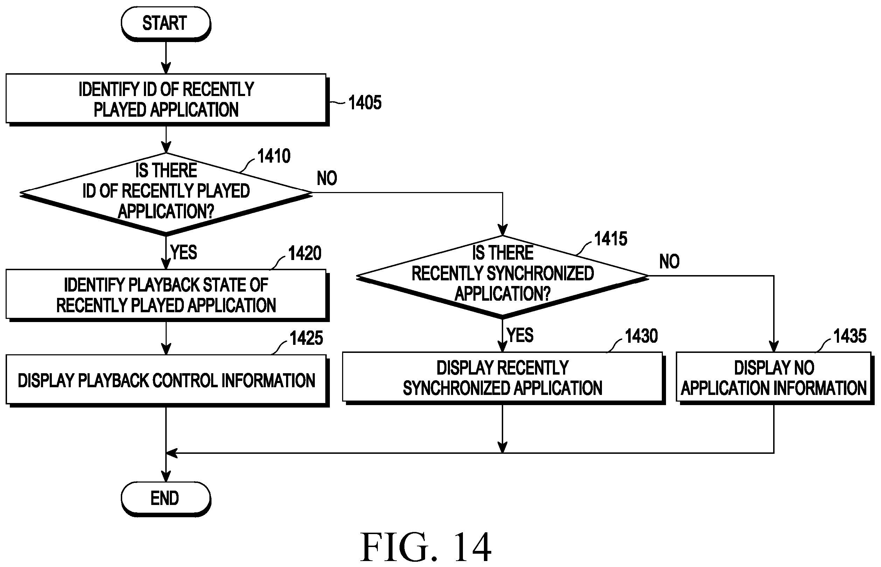

When the media linkage service is started based on the data provided from the server, the electronic device 201 may automatically play recently played media without a user needing to specify media (e.g., music or video) for the media linkage service or execute an application each time, and may control the lighting device according to attribute information configured through a setting screen while playing the media. A specific description will be made with reference to FIG. 14. FIG. 14 is a flowchart illustrating an automatic playback operation when media synchronization starts according to an embodiment. For example, an example of a screen corresponding to the operation of FIG. 14 is as shown in FIG. 9A and FIG. 9B.

Referring to FIG. 14, the electronic device 201 may identify the ID of a recently played application in operation 1405, and may identify whether there is the ID of the recently played application in operation 1410.

When there is the ID of the recently played application, the electronic device 201 may identify the playback state of the recently played application in operation 1420, and may display playback control information in operation 1425. When there is no ID of the recently played application, the electronic device 201 may identify whether there is a recently synchronized application in operation 1415. When there is the recently synchronized application, the electronic device 201 may display the recently synchronized application in operation 1430, and when there is no recently synchronized application, the electronic device 201 may display no application information in operation 1435. For example, the foregoing operations may be performed when the synchronization start button of FIG. 9a is pressed, and the operations may be performed by the electronic device 201, but may also be performed by a content provider that provides content, such as music or video.

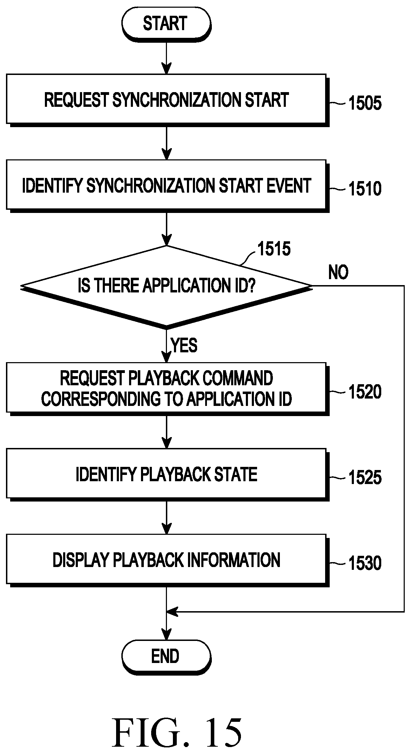

The electronic device 201 may request and receive information related to playback from the content provider before starting a media synchronization service, which may be specifically described with reference to FIG. 15. FIG. 15 is a flowchart illustrating a playback request operation when media synchronization starts according to an embodiment.

Referring to FIG. 15, when there is a synchronization start request in operation 1505, the electronic device 201 may identify a synchronization start event in operation 1510. In operation 1515, the electronic device 201 may identify whether there is an application ID in response to identification of the synchronization start event. When there is no application ID for media playback, playback is not possible, and thus the operation may be terminated. When there is the application ID for media playback, the electronic device 201 may request a playback command corresponding to the application ID in operation 1520, may identify a playback state in operation 1525, and may display playback information in operation 1530. For example, the electronic device 201 may transmit the playback command to a content provider for music playback and obtain the playback state corresponding thereto, thereby displaying related information during media playback.

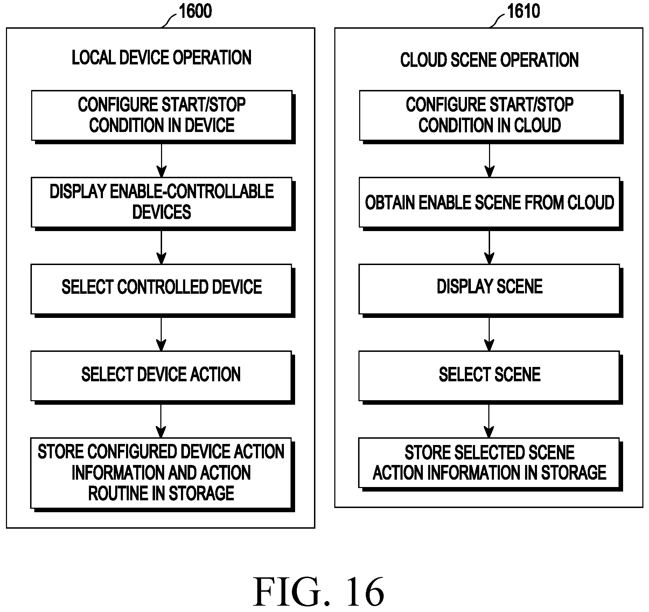

In an embodiment, a user may designate a peripheral audio device and a scene mode in advance, and accordingly the electronic device 201 may link peripheral devices in media playback according to the designated information when a media linkage service starts. To this end, an IoT server and the electronic device may each perform a series of operations illustrated in FIG. 16 when a media synchronization service starts. FIG. 16 illustrates an operation of each of an IoT server and an electronic device upon start of a media synchronization service according to an embodiment.

Referring to FIG. 16, the operation 1600 of the electronic device 201 may include an operation of configuring a condition for starting and stopping a media synchronization service (set start/stop condition). The operation 1600 may include an operation of displaying controllable devices (show enable controllable devices) and selecting a controllable device (select on controlled device). In addition, the operation 1660 may include an operation of selecting an operation of a controllable device and storing corresponding operation information and a setting for a routine. For example, when starting the media synchronization service, operation information related to a specified scene (e.g., a party time mode, an exercise mode, or a relax mode) is configured, and at least one IoT device (e.g., a lighting device, an automatic curtain, or a speaker) for performing the operation information may be designated.

The operation 1610 of the IoT server 340 may include an operation of configuring a condition for starting and stopping the media synchronization service (set start/stop condition). The operation 1610 may include an operation of obtaining selectable scenes and displaying the scenes to be selected. In addition, the operation 1610 may include an operation of storing a setting for a selected scene.

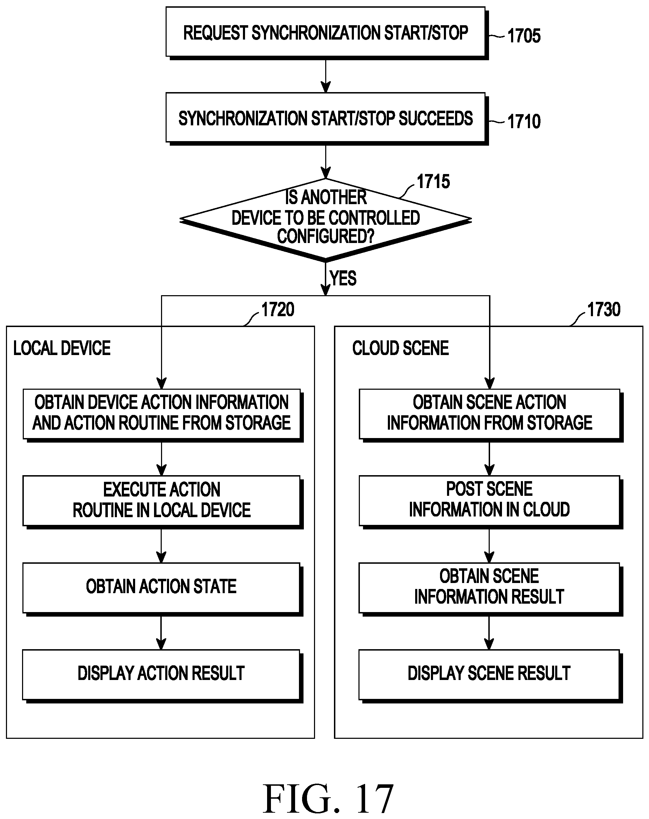

FIG. 17 illustrates an operation of a media synchronization service based on setting information about each of an IoT server and an electronic device according to an embodiment.

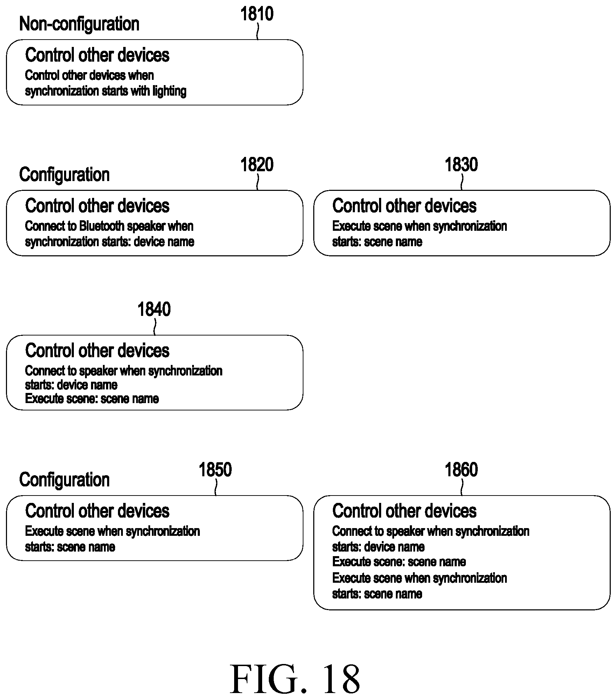

Referring to FIG. 17, in response to a synchronization start/stop request in operation 1705, the IoT server and the electronic device may successfully start/stop synchronization in operation 1710. When the media synchronization service starts, it may be identified whether another device to be controlled is configured in operation 1715. For example, when another device to be controlled is configured in addition to a lighting device during media playback, information previously stored as a criterion for determining how to control the other device together with the lighting device may be imported and used. In a case where no other device is configured and in a case where the other device is configured, the electronic device 201 may display a notification as illustrated in FIG. 18. FIG. 18 illustrates a notification according to whether a peripheral device for a media synchronization service is configured according to an embodiment.

As illustrated in FIG. 18, each notification window 1810, 1820, 1830, 1840, 1850, or 1860 may display a notification with different content, such as content indicating that another device may be controlled in synchronization with a lighting device, content indicating that another device may be controlled together even when only media is played, or content regarding a specified scene, depending on the setting of a synchronized IoT device.

In an embodiment, an operation 1720 of the electronic device 201 may include an operation of importing information storing operation information about a controllable device and a setting for a routine, executing the information, importing an operation state according to the execution, and displaying a result. An operation 1730 of the IoT server 340 may include an operation of importing a stored setting for a selected scene, posting scene information, importing a scene information result, and displaying the result.

As described above, the electronic device 201 may import the information storing the operation information and the setting for the routine and previously stored scene information before starting the media synchronization service, and may automatically operate other designated IoT devices including the lighting device, based on the stored information when playing media. For example, in a case of media, such as music, once configured, the lighting device and other types of devices that match the mood of music may be controlled together when listening to music.

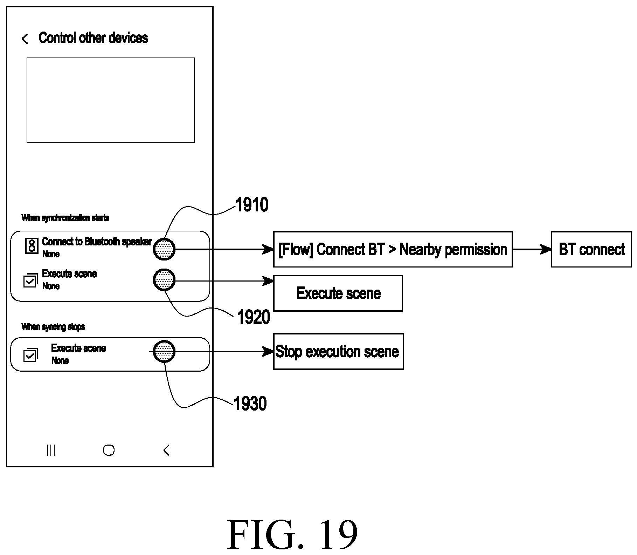

FIG. 19 illustrates an example of a screen related to additional setting of a peripheral device according to an embodiment.

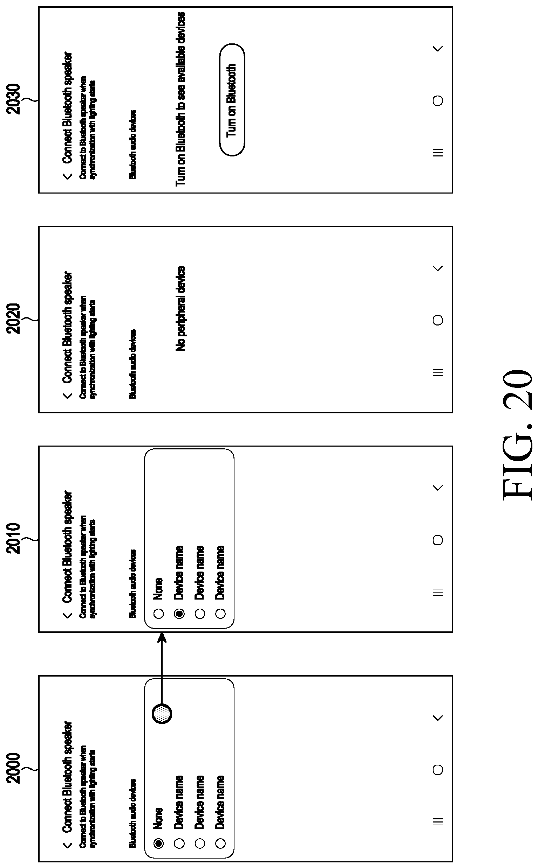

Referring to FIG. 19, in response to selection 1910 for adding a peripheral device, the electronic device 201 may display a screen as illustrated in FIG. 20. In response to the selection 1910 for adding the peripheral device, the electronic device 201 may search for a peripheral device to be automatically connected. FIG. 20 illustrates an example of a screen for registering an audio device to be connected via Bluetooth according to an embodiment.

For example, a user may select a peripheral device (e.g., a Bluetooth speaker) to be automatically connected from a list of retrieved peripheral devices through first to fourth screens 2000, 2010, 2020, and 2030 illustrated in FIG. 20. When there is no retrieved peripheral device, a notification that there is no retrieved peripheral device may be displayed as in the third screen 2020. When a Bluetooth function of the electronic device 201 is turned off, a notification to turn on the Bluetooth function may be displayed as in the fourth screen 230.

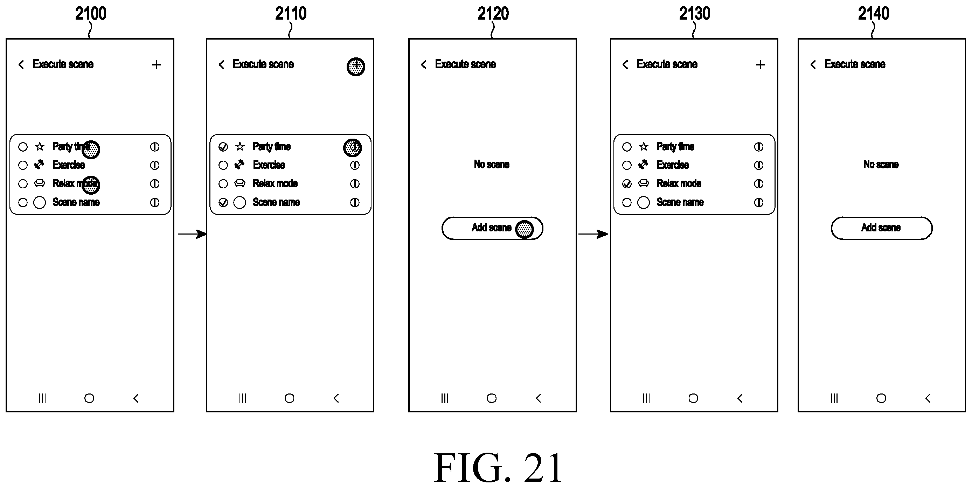

FIG. 21 illustrates an example of a screen for scene selection related to a media synchronization service according to an embodiment.

Referring to FIG. 21, the electronic device 201 may select (1920) one scene according to a user's selection when starting media synchronization as in FIG. 19. For example, the electronic device 201 may display a list of scenes on a first screen 2100 of FIG. 21 in response to the selection 1920 of the scene at the start of media synchronization, and may display a screen for adding a scene on a third screen 2120 in response to a selection of adding a scene on a second screen 2110.

In addition, as illustrated in FIG. 19, the electronic device 201 may also select (1930) one scene when terminating media synchronization. For example, in response to the selection 1930 of the scene at the termination of media synchronization, the electronic device 201 may display a list of scenes for selecting a scene at the termination on a fourth screen 2130 of FIG. 21, and may display a screen for adding a scene on a fifth screen 2140.

For example, when "party time mode" is selected as the scene at the start of media synchronization and "relax mode" is selected as the scene at the termination, the electronic device 201 may control the operation of an IoT device corresponding to a scene configured to "relax mode" in response to the termination of a media synchronization service.

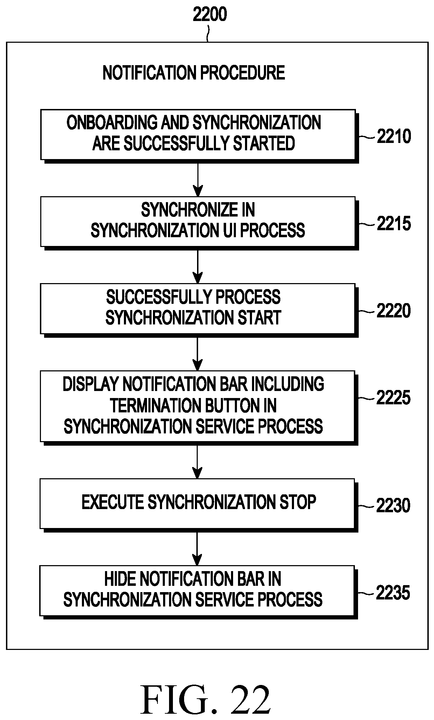

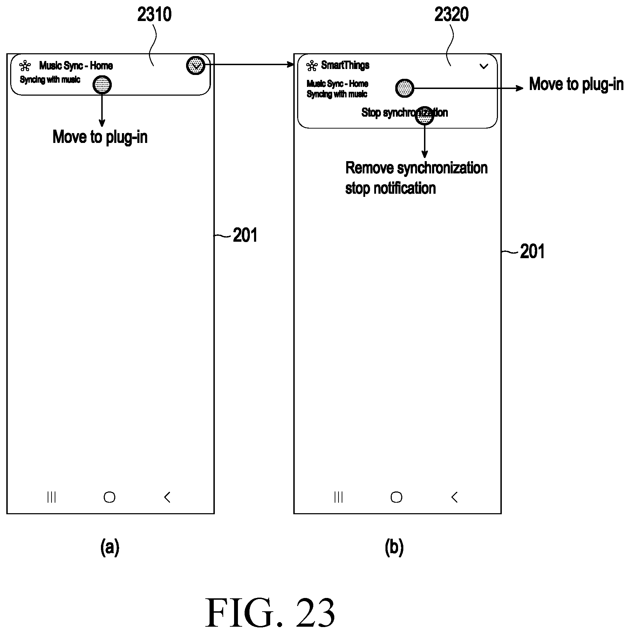

FIG. 22 illustrates a procedure for providing a media synchronization service in the form of a floating window according to an embodiment. For a better understanding of a description of FIG. 22, FIG. 23 will be referenced. FIG. 23 illustrates a floating window for a media synchronization service according to an embodiment.

Referring to FIG. 22, an embodiment illustrates a method for providing a user interface that enables use of a music linkage service without entering a menu for a media linkage service within an IoT application.

Referring to FIG. 22, a notification procedure 2200 may include an operation of executing a synchronization start in a synchronization UI process in operation 2215 when onboarding and synchronization are successfully started in operation 2210 and an operation of displaying a notification bar including a termination button in a synchronization service process in operation 2225 when the synchronization start is successfully processed in operation 2220. When a synchronization stop is executed in operation 2230, the notification bar may be hidden in the synchronization service process in operation 2235.

For example, when music is played and a lighting control service is executed, the electronic device 201 may display an execution screen corresponding to music playback in the form of a floating window 2310 on at least a portion of the display of the electronic device 201 as illustrated in FIG. (a) of 23. The electronic device 201 may restore the music playback screen to a previous size thereof, based on a user input on the floating window 2320, as illustrated in FIG. (b) of 23. For example, the music playback screen in the previous size may be displayed to occupy the entire display of the electronic device 201. In addition, the electronic device 201 may stop synchronization, based on a user input on an object (e.g., a "stop syncing" button) in the floating window 2320, and may immediately hide the floating window 2320 not to be displayed.

As described above, according to an embodiment, a lighting service corresponding to the mood of music may be provided through a lighting device (or light system) that is capable of interworking with media without being limited to content in a specific format, that is, without distinction of content providers, when playing music.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a nonvolatile storage medium may store instructions, the instructions may be configured to, when executed by at least one processor 220 of an electronic device 201, cause the electronic device to perform at least one operation, and the at least one operation may include an operation of identifying at least one Internet of Things (IoT) device capable of interworking in relation to playback of content. According to an embodiment, the at least one operation may include an operation of displaying a setting screen including pieces of controllable attribute information about the identified IoT device. According to an embodiment, the at least one operation may include an operation of storing pieces of attribute information to be applied to the identified IoT device among the pieces of controllable attribute information. According to an embodiment, the at least one operation may include an operation of controlling the identified IoT device to perform an operation according to the pieces of stored attribute information, based on the play back of the content.

## Claims

1. An electronic device (201) comprising:
a display (260);
a communication module (290); and
at least one processor (220) operatively connected to the communication module and the display,
wherein the at least one processor is configured to:
identify at least one Internet of Things (IoT) device capable of interworking in relation to playback of content through the communication module (290);
display a setting screen comprising pieces of controllable attribute information about the identified IoT device on the display;
store pieces of attribute information to be applied to the identified IoT device among the pieces of controllable attribute information; and
control the identified IoT device to perform an operation according to the pieces of stored attribute information, based on the play back of the content.

2. The electronic device of claim 1, wherein the content comprises at least one of music and video, and the identified IoT device comprises a lighting device.

3. The electronic device of claim 1 or 2, wherein the pieces of controllable attribute information about the IoT device comprise at least one a brightness, color, intensity of change, color temperature, or power on/off of the lighting device.

4. The electronic device of any one of claims 1 to 3, wherein the setting screen comprises at least one of an item related to the playback of the content, guide information about the content, or an item indicating a start of a lighting control service according to the playback of the content.

5. The electronic device of any one of claims 1 to 4, wherein the at least one processor is configured to:
obtain information about an application that performs the playback of the content, based on at least one piece of setting information related to a type of an application capable of content playback, an application ID, or a playback state;
obtain information related to the playback of the content, based on the obtained information about the application; and
control the identified IoT device to perform the operation according to the pieces of stored attribute information according to the information related to the playback of the content.

6. The electronic device of any one of claims 1 to 5, wherein the at least one processor is configured to wait for a specified time in response to stoppage or termination of the playback of the content, and release synchronization with the identified IoT device after a lapse of the specified time.

7. The electronic device of claim any one of claims 1 to 6, wherein the at least one processor is configured to identify whether a video transmission/reception service is connected during the playback of the content, and release the synchronization with the identified IoT device in response to connection to the video transmission/reception service.

8. The electronic device of any one of claims 1 to 7, wherein the at least one processor is configured to store the pieces of attribute information to be applied to the identified IoT device by mapping the attribute information to each virtual space managed by each of at least one hub device.

9. The electronic device of any one of claims 1 to 8, wherein the at least one processor is configured to identify the at least one IoT device capable of interworking in relation to the playback of the content in response to a content playback request in a state in which an application to control a plurality of IoT devices is executed.

10. The electronic device of any one of claims 1 to 9, wherein the at least one processor is configured to display an execution screen corresponding to the playback of the content in a form of a floating window on at least a portion of the display during the playback of the content.

11. The electronic device of any one of claims 1 to 10, wherein the at least one processor is configured to, in the state in which the application to control the plurality of IoT devices is executed:
identify a specified first scene mode in relation to the content playback request among previously stored scene modes in response to the content playback request;
control at least part of the plurality of IoT devices to perform a function corresponding to the specified first scene mode during the playback of the content;
identify a specified second scene mode in relation to the termination of the playback of the content in response to the termination of the playback of the content; and
control at least part of the plurality of IoT devices to perform a function corresponding to the specified second scene mode after the termination of the playback of the content.

12. A method for an electronic device to provide a media-based lighting control service, the method comprising:
identifying at least one Internet of Things (IoT) device capable of interworking in relation to playback of content;
displaying a setting screen comprising pieces of controllable attribute information about the identified IoT device;
storing pieces of attribute information to be applied to the identified IoT device among the pieces of controllable attribute information; and
controlling the identified IoT device to perform an operation according to the pieces of stored attribute information, based on the play back of the content.

13. The method of claim 12, wherein the content comprises music and video, and the identified IoT device comprises a lighting device.

14. The method of claim 12 or 13, wherein the pieces of controllable attribute information about the IoT device comprise at least one of a brightness, color, intensity of change, color temperature, or power on/off of the lighting device.

15. A nonvolatile storage medium storing instructions, the instructions being configured to, when executed by at least one processor (220) of an electronic device (201), cause the electronic device to perform at least one operation, the at least one operation comprising:
an operation of identifying at least one Internet of Things (IoT) device capable of interworking in relation to playback of content;
an operation of displaying a setting screen comprising pieces of controllable attribute information about the identified IoT device;
an operation of storing pieces of attribute information to be applied to the identified IoT device among the pieces of controllable attribute information; and
an operation of controlling the identified IoT device to perform an operation according to the pieces of stored attribute information, based on the play back of the content.
